# DEMANDE DE BREVET EUROPEEN

(11) **EP 1 480 435 A1**
(43) Date de publication de la demande: **24.11.2004**
(21) Numéro de dépôt: 03391001.9
(22) Date de dépôt: 21.05.2003
(51) Int. Cl.: H04M 19/00

(54) **Procédé et dispositif de transmission d'énergie électrique dans un système de télécommunications par fils**

(71) Demandeur: CE + T International, 9911 Troisvierges (LU)
(72) Inventeur: Frebel, Fabrice, 4020 Wandre (BE); Paque, Michel, 4130 Esneux (BE); Bleus, Paul, 4020 Jupille (BE)
(74) Mandataire: Claeys, Pierre

(57) **Abrégé**

Procédé et dispositif de transmission d'énergie électrique, d'une puissance déterminée, dans un système de télécommunications par fils qui comprend un central (1), une source d'énergie électrique (3), présentant une tension nominale, au moins un satellite (5) à alimenter en énergie électrique, et des paires de fils (TP) qui relient le central et le satellite, comprenant une sélection de paires (TPL) de fils libres, une sélection des tension et intensité admises dans chaque paire, un calcul d'une puissance utile que chaque paire peut transmettre, un calcul du nombre de paires (TPL) nécessaires pour transmettre la puissance déterminée, un branchement, à ladite source d'énergie (3), de chaque paire nécessaire par l'intermédiaire d'au moins un convertisseur commandé (7), un branchement de chaque paire nécessaire à au moins un convertisseur satellite (13), et un branchement en parallèle des sorties des convertisseurs satellites afin d'obtenir la puissance déterminée, le procédé comprenant à la mise en route d'une transmission d'énergie, une commande du ou de chaque convertisseur commandé pour que sa sortie (11) délivre à sa paire de fils (TPL) correspondante des tension et intensité réduites de sécurité et une mesure de l'impédance d'entrée de chaque convertisseur satellite.

## Description

La présente invention concerne un procédé de transmission d'énergie électrique, d'une puissance déterminée, dans un système de télécommunications par fils, du genre d'un réseau téléphonique urbain. L'invention n'est cependant pas limitée à ce seul domaine. Un système concerné par l'invention peut comprendre un poste de base ou central, une source d'énergie électrique disponible au central et présentant une tension nominale, au moins un poste auxiliaire ou satellite à alimenter en énergie électrique, et des paires de fils de télécommunication qui relient le central et le satellite. Il peut y avoir plusieurs centraux de tailles différentes, reliés ou non entre eux. Un ou plusieurs satellites peuvent être reliés à un ou plusieurs centraux. Le courant nécessaire est en particulier continu dans ce genre de système.

Etant donné l'évolution des réseaux de télécommunications et la nécessité d'ajouter ou de prévoir dans les satellites des dispositifs comme des démultiplexeurs pour fibres optiques, il faut équiper à cet effet ces satellites en alimentations en énergie.

Plutôt que de prévoir pour un ou chacun ou certains des satellites une alimentation en énergie distincte à partir d'un réseau électrique plus ou moins proche, et donc de devoir y installer chaque fois notamment un compteur d'énergie, un redresseur, des batteries à y entretenir, une ventilation, etc. , on préfère pouvoir recevoir l'énergie nécessaire à partir de la source d'énergie disponible au central, ceci réduisant favorablement dans les satellites le matériel à y mettre en oeuvre, donc aussi l'installation et l'entretien dudit matériel ainsi que le type de réceptacle pour celui-ci à l'endroit du satellite.

Il est déjà connu de faire coexister dans un même câble entre central et satellite des paires de fils torsadées utilisées à des fins différentes, principalement
- pour des signaux analogiques dans la bande passante de 300 à 3400 Hz avec des très basses tensions (TBT : soit < 60 Vdc),
- pour transporter des données dans la bande de 25 kHz à quelques MHz, utilisant des très basses tensions (TBT : soit < 60Vdc),
- pour transporter de l'énergie de manière sécurisée avec des tensions supérieures à 60 Vdc, notamment jusqu'à 400 Vdc (typiquement 320 Vdc mais avec des courants de défaut très faibles (< 25 mA dans tous les cas).

Pour transporter l'énergie nécessaire susdite, sans avoir à poser un câble additionnel, un procédé peut comprendre donc une sélection de paires de fils libres dans le câble de télécommunications entre le central et le satellite, une sélection des tension et intensité admises dans chaque paire de fils libre, un calcul d'une puissance utile que chaque paire de fils libre peut transmettre, et un calcul du nombre de paires libres nécessaires pour transmettre la puissance déterminée, en divisant celle-ci par ladite puissance utile par paire. On effectue alors un branchement, à ladite source d'énergie du central, de chaque paire nécessaire par l'intermédiaire d'au moins une sortie d'un convertisseur dont une entrée est branchée à la source et qui convertit la tension nominale en tensions choisies, dont la tension admise. On effectue ensuite, à l'endroit du satellite, un branchement de chaque paire nécessaire à au moins une entrée d'un convertisseur satellite, d'une impédance d'entrée connue et qui, recevant à l'entrée la tension admise, met à disposition à une sortie une tension utile pour le satellite, et de plus un branchement en parallèle des sorties des convertisseurs satellites afin d'obtenir la puissance déterminée.

A l'endroit du satellite, le préposé qui fait le branchement de la ou des paires nécessaires à la transmission d'énergie aussi bien que de paires destinées à de la télécommunication court cependant constamment un risque d'électrocution puisque, au cours de ses recherches des fils à brancher, il touche automatiquement, ou il risque de toucher, des fils transmettant cette énergie à des tensions de l'ordre de, ou supérieures à, 60 volts et à des intensités qui peuvent avoisiner typiquement 60 milliampères en mode de circuit de téléalimentation - C (donc à courant limité, soit en abrégé ci-après : RFT - C = Remote Feeding Telecommunication circuit, limited in Current) ou typiquement 200 mA en mode de circuit de téléalimentation - V (donc à tension limitée, soit en abrégé ci-après : RFT - V = Remote Feeding Telecommunication circuit, limited in Voltage).

Pour éviter ce risque trop important qui, s'il n'y a pas de solution fiable, interdit la mise en oeuvre du procédé décrit ci-dessus, la déposante de la présente invention a mis au point une procédure, qui peut être gérée de manière automatisée, qui ne permet la transmission d'énergie que si ont été franchies avec satisfaction plusieurs étapes de contrôle de sécurité qui sont effectuées à des tensions et intensités sans risque pour l'homme et qui sont particulièrement choisies quant à leurs modalités et à leur ordre.

A cet effet, le procédé de l'invention comporte d'abord un choix d'un convertisseur commandé à l'endroit du central, c'est-à-dire un convertisseur dont on peut régler de manière sûre à des valeurs déterminées précises les tension et intensité de sortie.

Lors de la première activation des convertisseurs centraux, au moment de l'installation, ceux-ci génèrent un signal image du groupe de convertisseurs auquel ils appartiennent, ici de préférence une fréquence basse entre 10 et 200 Hz qui disparaît dès la connexion de convertisseurs satellites.

Lors d'une mise en route d'une transmission d'énergie, on commande le ou chaque convertisseur commandé pour que sa sortie délivre à sa paire de fils correspondante des tension et intensité réduites de sécurité, qui respectent notamment les normes appliquées sur le territoire où est situé le système de télécommunications. Ensuite on mesure l'impédance d'entrée de chaque convertisseur satellite ainsi alimenté. A cet effet, le niveau des tension et intensité réduites est choisi pour que cette mesure soit sans danger pour les applications en basse tension (< 60 Vdc) et pour les opérateurs.

Si cette impédance d'entrée mesurée ne correspond pas chaque fois à l'impédance d'entrée connue, on provoque une coupure immédiate de l'alimentation d'au moins la ou les paires concernées par une non correspondance, et une suspension de la mise en route. Par contre, si cette impédance d'entrée mesurée correspond chaque fois à l'impédance d'entrée connue, on commande le convertisseur commandé correspondant pour qu'il délivre à la paire de fils correspondante la tension admise, avec l'intensité réduite de sécurité. Après un délai de sécurité et une vérification de la tension réellement présente, on poursuit la mise en route par une commande du ou de chaque convertisseur commandé pour que chacun délivre à sa paire ou aux paires de fils les tension et intensité admises.

Dans un mode de réalisation de l'invention, pour ladite mesure de l'impédance d'entrée on règle le convertisseur commandé de façon à ce que chaque paire de fils nécessaire reçoive une très basse tension de sécurité, sans effet physiologique pour l'homme, typiquement de l'ordre de 50 volts, et de préférence une très faible intensité de sécurité, sans danger pour l'homme, typiquement de l'ordre de 10 milliampères.

Suivant un mode de réalisation particulier de l'invention, pour chaque paire on mesure dans un même fil l'intensité à la sortie du convertisseur commandé et l'intensité à l'entrée du convertisseur satellite, on calcule la différence entre l'intensité à la sortie et l'intensité à l'entrée, et si cette différence est supérieure à une valeur strictement inférieure à 25 milliampères, de façon à ne produire aucun effet physiologique dans un corps humain, on coupe l'alimentation d'au moins cette paire avec une réaction de coupure typiquement inférieure à 20 millisecondes. De préférence, on transforme la mesure d'intensité réalisée à l'entrée du convertisseur satellite en une fréquence, de l'ordre de 10 kHz, variant en fonction de la valeur mesurée, on applique, près de l'entrée du convertisseur satellite correspondant, cette fréquence à la paire de fils mesurée, on prélève cette fréquence près de la sortie du convertisseur central commandé correspondant, et on utilise cette fréquence pour la comparer avec la mesure locale du convertisseur satellite.

La présente invention concerne également un dispositif de transmission d'énergie électrique d'une puissance déterminée, dans un système susdit de télécommunications par fils, pour la mise en oeuvre du procédé précité, le dispositif comprenant notamment des paires de fils de télécommunication qui relient un central et un satellite. Pour chaque paire de fils nécessaire et libre pour être utilisée pour une transmission d'énergie électrique, il y a
- au central, un convertisseur commandé agencé pour recevoir, à une entrée branchée à la source d'énergie, la tension nominale et pour transformer celle-ci en tensions choisies, dont ladite tension admise, disponibles à au moins une sortie branchée à ladite paire libre nécessaire,
- à l'endroit du satellite, un convertisseur satellite comportant une entrée, d'une impédance d'entrée connue, branchée à la paire de fils nécessaire et une sortie branchée en parallèle avec la ou les sorties d'autres convertisseurs satellites pour obtenir la puissance déterminée.

Des moyens de commande, raccordés fonctionnellement à chaque convertisseur commandé, sont agencés pour commander celui-ci de façon à ce que sa sortie susdite, ou chacune, délivre à la paire de fils nécessaire correspondante, au moment d'une mise en route, des tension et intensité réduites de sécurité. Des moyens de mesure de l'impédance d'entrée de chaque convertisseur satellite sont raccordés fonctionnellement aux moyens de commande et agencés de façon à ce que,
- si cette impédance d'entrée mesurée ne correspond pas chaque fois à l'impédance d'entrée connue du convertisseur satellite, ils provoquent une coupure de l'alimentation d'au moins la ou les paires concernées par une non correspondance, et une suspension de la mise en route,
- si cette impédance d'entrée mesurée correspond chaque fois à l'impédance d'entrée connue, ils provoquent une commande de chaque convertisseur commandé pour que la sortie de celui-ci délivre à sa paire de fils correspondante la tension admise, avec l'intensité réduite de sécurité et, après un délai de sécurité, avec l'intensité admise.

Avantageusement, le dispositif suivant l'invention comprend un appareil de mesure comportant, raccordés fonctionnellement entre eux des moyens pour mesurer, pour chaque paire, dans un même fil de celle-ci l'intensité à la sortie du convertisseur commandé et l'intensité à l'entrée du convertisseur satellite, des moyens pour calculer la différence entre l'intensité à la sortie du convertisseur central ou commandé et l'intensité à l'entrée du convertisseur satellite, des moyens de comparaison pour vérifier si cette différence est inférieure ou supérieure à une valeur typiquement de l'ordre de 25 milliampères, et des moyens pour couper l'alimentation d'au moins cette paire, si ladite différence est supérieure, avec une réaction de coupure typiquement inférieure à 20 millisecondes.

Dans une forme de réalisation particulière de l'invention, il est associé audit appareil de mesure,
- à l'endroit du satellite, un engin émetteur agencé pour transformer la mesure d'intensité réalisée à l'entrée du convertisseur satellite en un signal, notamment une fréquence, variant en fonction de la valeur mesurée et pour appliquer ce signal à la paire de fils mesurée, et
- à l'endroit du convertisseur commandé, un engin récepteur agencé pour capter ledit signal sur la paire de fils, pour la transformer à l'inverse en la valeur d'intensité mesurée et pour transmettre cette valeur aux moyens prévus pour calculer ladite différence.

Il est à noter qu'en télécommunication, tant le ou les convertisseurs commandés que les convertisseurs satellites mentionnés ci-dessus sont usuellement des convertisseurs de courant continu en courant continu et fonctionnent de préférence selon le principe de découpage.

D'autres détails et particularités de l'invention ressortiront des revendications secondaires et de la description des dessins schématiques qui sont annexés au présent mémoire et qui illustrent, à titre d'exemples non limitatifs, le procédé et des formes de réalisation particulières du dispositif suivant l'invention.
La figure 1 montre un central et un satellite comportant le matériel concerné par l'invention et des paires de fils installées entre le central et le satellite.
Les figures 2 et 3 montrent deux modes de raccordement entre les convertisseurs commandés et les convertisseurs satellites.
La figure 4 montre une disposition d'un appareil de mesure d'intensité sur un fil d'une paire.
La figure 5 montre un développement de l'appareil de mesure de la figure 4, complété par des émetteur et récepteur de signal en fréquence modulée.
La figure 6 montre un type de branchement de l'émetteur de la figure 5
La figure 7 montre un type préféré de branchement de l'émetteur montré à la figure 5.
La figure 8 montre une représentation des courants et tensions à prendre en compte autour d'un convertisseur satellite pour une gestion améliorée de son fonctionnement.
La figure 9 montre en graphique la relation entre le courant d'entrée du convertisseur satellite de la figure 8 et la puissance que celui-ci peut délivrer.
La figure 10 montre en graphique la relation entre une tension de stabilisation calculée pour le convertisseur satellite de la figure 8 et la puissance que celui-ci peut délivrer.
La figure 11 montre un branchement usuel à la terre d'un équipement de télécommunication et de sa source d'alimentation.
La figure 12 montre, en complément au branchement représenté à la figure 11, un branchement d'un dispositif de contrôle de raccordement à la terre ou de détection d'un défaut de terre basé sur la tension U, branché aux pôles d'entrée de l'équipement de télécommunication.

Dans les différentes figures, les mêmes notations de référence désignent des éléments identiques ou analogues.

Pour faciliter la compréhension de l'invention, sans que cela puisse être considéré comme limitant sa portée, on décrira d'abord le dispositif de l'invention.

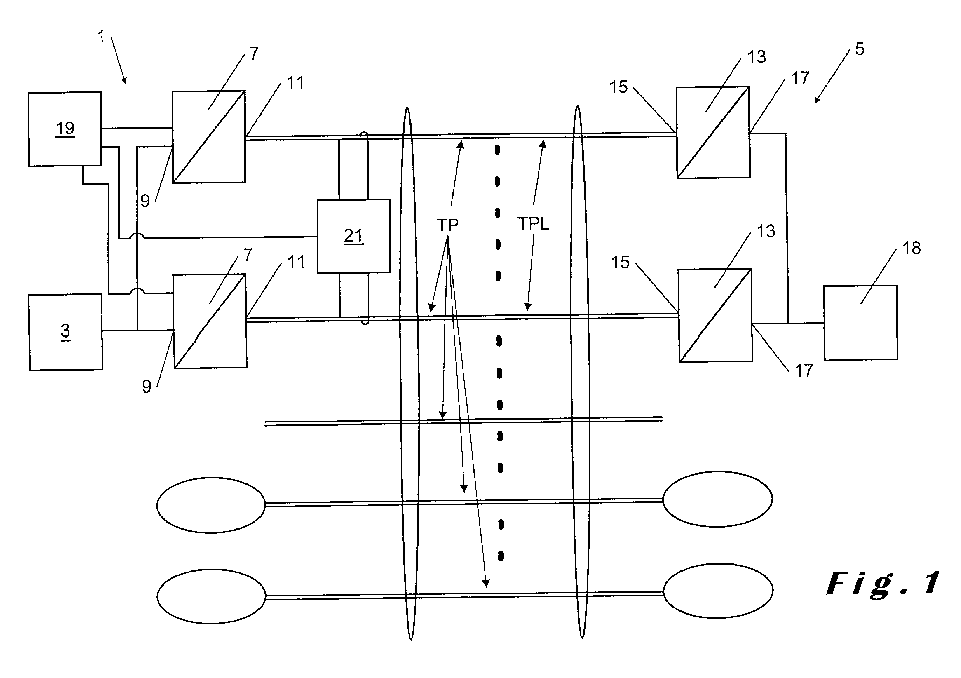

Un dispositif de transmission d'énergie électrique, d'une puissance déterminée, auquel s'adresse l'invention concerne un système de télécommunications par fils qui peut comprendre (figure 1)
- un poste de base ou central 1,
- une source 3 d'énergie électrique disponible au central 1, présentant une tension nominale Ub de par exemple 48 volts en courant continu (48 Vdc ci-après),
- au moins un poste auxiliaire ou satellite 5 à alimenter en énergie électrique, et
- des paires de fils de télécommunication TP (pour "twisted pair" en anglais, c'est-à-dire "paire de fils torsadée") qui relient le central 1 et le satellite 5.

Parmi ces paires de fils TP, de nombreuses sont en réserve et donc non utilisées pour la télécommunication. Certaines peuvent alors être utilisées pour de la transmission d'énergie électrique.

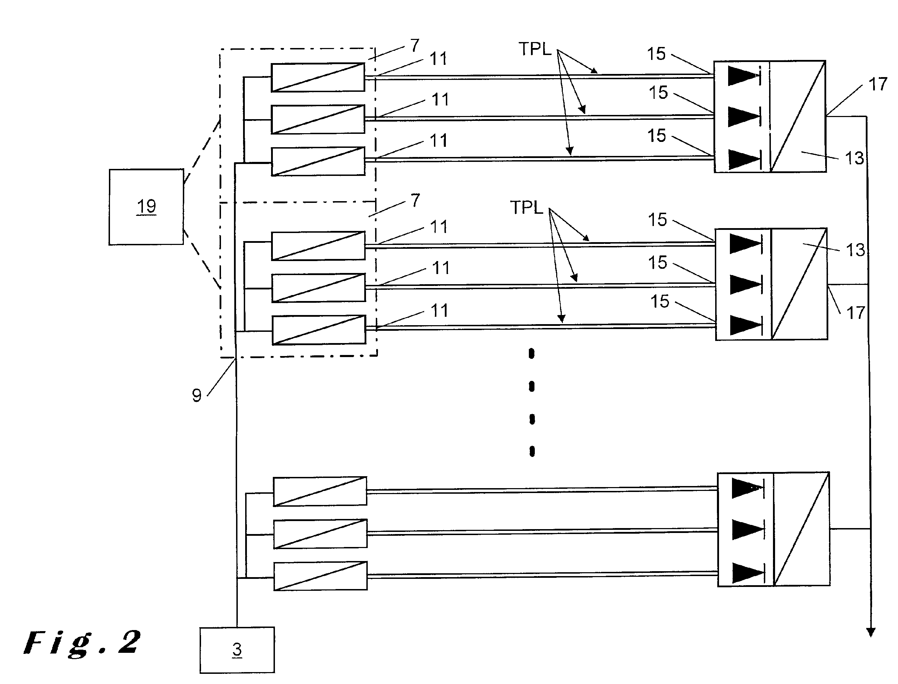

Suivant l'invention, le dispositif prévu pour cette transmission d'énergie comprend au central 1, pour chaque paire de fils nécessaire et libre TPL utilisée pour ladite transmission, un convertisseur commandé 7 agencé pour recevoir à une entrée 9 branchée à la source d'énergie 3 la tension nominale Ub et pour transformer celle-ci en tensions choisies, dont une tension admise Ua définie ci-dessous, disponibles à au moins une sortie 11 branchée à ladite paire libre nécessaire TPL. Il faut comprendre ici qu'un même convertisseur commandé 7 peut cependant servir à alimenter plusieurs paires TPL (figure 2) et, qu'à cet effet, il peut comporter plusieurs sorties 11, par exemple une sortie 11 par paire TPL, et même des sorties 11 de réserve. Dans un convertisseur commandé 7 utilisé pour l'invention, la commande prévue est agencée pour pouvoir régler séparément pour chaque sortie 11 les valeurs de tension et d'intensité et une coupure de ces tension et intensité.

A l'endroit du satellite 5, la paire de fils nécessaire TPL est branchée à un convertisseur satellite 13 qui comporte une entrée 15, d'une impédance d'entrée Ze connue, et une sortie 17 branchée en parallèle avec la ou les sorties 17 d'autres convertisseurs satellites 13 pour obtenir la puissance déterminée nécessaire pour une utilisation 18.

Des moyens de commande 19, par exemple un micro-contrôleur ou un automate programmable, sont raccordés fonctionnellement (ou intégrés) à chaque convertisseur commandé 7 ; ils sont agencés pour commander celui-ci de façon à ce que sa ou chaque sortie 11 susdite délivre à la paire de fils nécessaire TPL correspondante, au moment d'une mise en route, des tension Us et intensité Is réduites de sécurité.

Par exemple, le convertisseur commandé 7, prévu pour réaliser l'invention, peut être un assemblage de plusieurs blocs comportant chacun plusieurs convertisseurs indépendants 7 qui peuvent être commandés séparément par les moyens de commande 19 du genre automate programmable ou bien celui-ci peut commander des groupes de trois convertisseurs indépendants 7 ou encore il peut y avoir un panachage, en fonction de besoins particuliers, de groupes de nombres différents de convertisseurs indépendants 7 dont chaque groupe est commandé séparément.

Raccordés fonctionnellement aux moyens de commande 19, il y a des moyens 21 de mesure de l'impédance d'entrée Ze de chaque convertisseur satellite 13. Ces moyens de mesure 21 sont agencés de façon à ce que, si l'impédance d'entrée mesurée Zem ne correspond pas chaque fois à l'impédance d'entrée Ze connue du convertisseur satellite 13, ils provoquent, par l'intermédiaire des moyens de commande 19, une coupure de l'alimentation d'au moins la ou les paires TPL concernées par une non correspondance, et une suspension de la mise en route.

Par contre, les moyens de mesure 21 sont agencés de façon à ce que, si cette impédance d'entrée mesurée Zem correspond chaque fois à l'impédance d'entrée Ze connue, ils provoquent, aussi par l'intermédiaire des moyens de commande 19, une commande du convertisseur commandé 7 correspondant pour que soit délivrée à sa paire de fils TPL correspondant à la mesure, par la sortie 11 associée, la tension admise Ua, avec l'intensité réduite de sécurité Is et, après un délai de sécurité, avec une intensité admise Ia définie ci-dessous.

Comme le propose la figure 1, la mesure de l'impédance Ze peut être faite à travers la paire de fils parce que l'impédance de cette paire est considérée connue.

Comme le montre la figure 2, chaque paire de fils nécessaire TPL peut être reliée à une sortie 11 distincte d'un convertisseur commandé 7, et à entrée 15 distincte d'un convertisseur satellite 13. De préférence, chaque sortie 11 d'un convertisseur commandé 7 est alors agencée pour donner des valeurs d'un ordre de grandeur respectant les normes de sécurité, soit typiquement de
- 2 milliampères pour un courant de fuite à la terre,
- 60 milliampères pour une intensité de charge maximum en mode RTF - C,
- 20 watts de puissance maximale,
- 320 volts de tension entre les fils de la paire (soit ± 160 volts entre un fil et la terre).

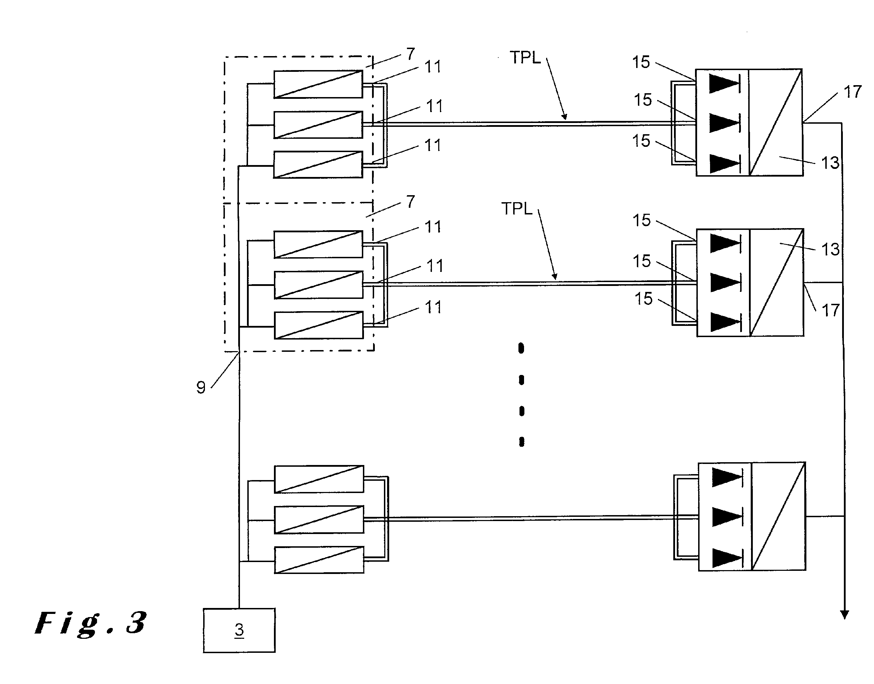

Dans une autre disposition, montrée à la figure 3, chaque paire de fils nécessaire TPL est reliée à trois sorties 11 de convertisseur(s) commandé(s) 7, avantageusement d'un même convertisseur 7 qui comporte trois sorties, et à trois entrées 15 de convertisseur(s) satellite(s) 13, également avantageusement d'un même convertisseur 13. De préférence ici aussi, pour chaque paire de fils nécessaire TPL, chacune desdites sorties 11 est agencée pour donner des valeurs d'un ordre de grandeur respectant les normes de sécurité, soit typiquement de
- 2 milliampères pour un courant de fuite à la terre,
- 25 milliampères maximum en cas de fuite différentielle entre deux fils de polarités inverses d'une même paire torsadée ou d'une paire à l'autre,
- 200 milliampères pour une intensité de charge maximum en mode RTF - V,
- 60 watts de puissance maximale,
- 320 volts de tension entre les fils de la paire (soit ± 160 volts par rapport à la terre).

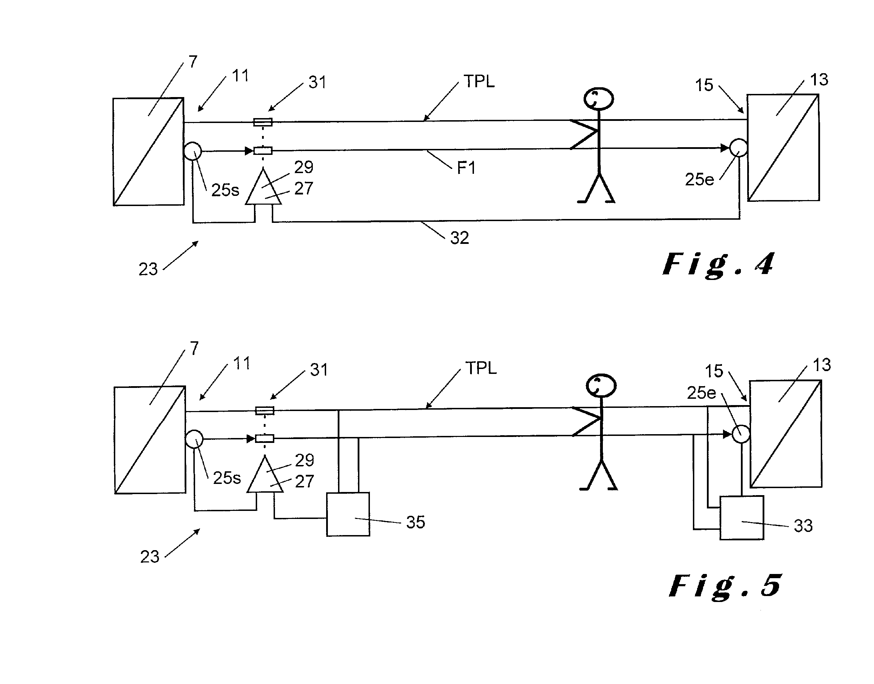

Le dispositif suivant l'invention peut encore comporter (figure 4) un appareil de mesure 23, différent des moyens de mesure 21 ci-dessus, qui comporte, raccordés fonctionnellement entre eux, des moyens 25 (25s, 25e) pour mesurer simultanément pour chaque paire TPL, dans un même fil F1 de celle-ci, l'intensité Ims à la sortie 11 du convertisseur commandé 7 et l'intensité Ime à l'entrée 15 du convertisseur satellite 13, et des moyens 27 pour calculer la différence entre l'intensité Ims à la sortie 11 et l'intensité Ime à l'entrée 15. A ces moyens de calcul 27 sont raccordés ou combinés fonctionnellement des moyens de comparaison 29 pour vérifier si cette différence est inférieure ou supérieure à une valeur typiquement de l'ordre de 25 milliampères, et ces moyens de comparaison 29 sont raccordés fonctionnellement à des moyens 31 agencés pour couper l'alimentation d'au moins cette paire TPL si ladite différence est supérieure, avec une réaction de coupure typiquement inférieure à 20 millisecondes. A cet effet, ces moyens de coupure 31 peuvent être raccordés au convertisseur commandé 7 ou même en faire partie.

Les moyens de commande 19 du convertisseur commandé 7 étant situés logiquement à l'endroit du central 1, l'appareil de mesure d'intensité 23 y est aussi installé de préférence, à l'exception de la partie 25e des moyens 25 de mesure de l'intensité Ime à l'entrée ou aux entrées 15 du ou des convertisseurs satellites 13.

Pour amener la valeur d'intensité Ime mesurée à ou aux entrées 15 depuis le satellite 5 jusqu'au central 1, il faudrait cependant une liaison 32 qui consomme au moins un fil de réserve.

Pour éviter cette liaison 32, le dispositif de l'invention peut comporter (figure 5), associé à la partie 25e des moyens de mesure 25, à l'endroit du satellite 5, un engin émetteur 33 agencé pour transformer cette valeur d'intensité mesurée Ime en une fréquence modulée en fonction de la valeur mesurée et pour appliquer cette fréquence modulée à la paire TPL de fils mesurée.

Alors, à l'endroit du convertisseur commandé 7 on dispose un engin récepteur 35 correspondant agencé pour capter ladite fréquence modulée sur la même paire de fils TPL, pour la transformer à l'inverse en la valeur d'intensité mesurée Ime et pour transmettre cette valeur aux moyens 27 prévus pour calculer ladite différence.

Dans un système de télécommunications, la bande de fréquence audio est comprise entre 300 et 3400 Hz et celle pour une transmission de données commence à 25 kHz. On choisira pour la fréquence modulée transmettant l'intensité Ime une bande non utilisée située entre ces deux bandes de fréquences et où une diaphonie n'est pas gênante.

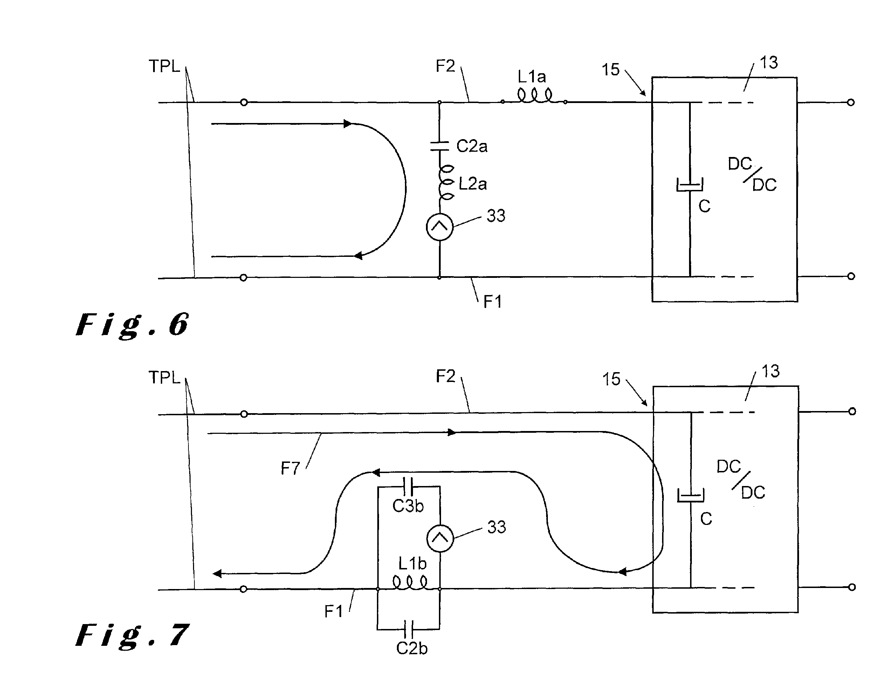

La figure 6 montre un schéma usuel pour le couplage de la fréquence modulée (FM) à la paire de fils TPL correspondante. De l'engin émetteur 33, une des bornes de sortie est raccordée directement à un fil F1 de la paire TPL tandis que l'autre borne de sortie est raccordée à l'autre fil F2 de la paire par un montage en série d'un condensateur C2a de couplage FM (de 0,3 µF/400V) et d'une bobine L2a de couplage FM de (1 mH/200 mA). Une bobine L1a de découplage (de 1 mH/200 mA) doit être posée entre la borne de l'entrée 15 vers cet autre fil F2 et la jonction du condensateur C2a et dudit autre fil F2. L'entrée 15 comporte usuellement entre ses deux bornes un condensateur C de découplage (de 10 µF). (Les valeurs indiquées entre parenthèses le sont à titre d'exemple).

Dans le montage de la figure 6, une flèche F6 montre le trajet parcouru par le signal FM produit par l'engin émetteur 33.

La figure 7 montre un schéma préféré pour le couplage de la fréquence modulée (FM) à la paire de fils TPL correspondante. Par exemple entre le fil F1 et la borne de l'entrée 15 du convertisseur satellite 13 destinée à ce fil F1 est raccordé un triple montage en parallèle d'un condensateur C2b de découplage FM (de 3 µF/16V), d'une bobine L1b de découplage (de 100 µH/200 mA) et d'un groupe comportant en série l'engin émetteur 33 et un condensateur C3b de couplage (de 2 µF/16V).

Dans le montage de la figure 7, une flèche F7 montre le trajet parcouru par le signal FM produit par l'engin émetteur 33. Comme on le voit, on profite, d'une part, de la présence du condensateur C de découplage (de 10 µF) et, avantageusement d'autre part, les éléments L1b et C3b sont de l'ordre de dix fois plus petits que les éléments respectifs L1a et C2a du circuit de la figure 6. De plus, la bobine L2a de la figure 6 est remplacée à la figure 7 par le condensateur C3b de plus petite taille.

Le procédé de l'invention est décrit ci-après en se référant au dispositif ci-dessus, pour en faciliter la compréhension, mais sans que cela ne puisse être pris comme limitant la portée dudit procédé. Le cas échéant, le procédé donne des étapes et/ou instructions de programmation de l'automate programmable mentionné ci-dessus.

Comme exposé au début, le procédé de l'invention est destiné à une transmission d'énergie électrique de manière sécurisée, d'une puissance déterminée, dans un système de télécommunications par fils tel que décrit ci-dessus.

Au départ, on réalise, suivant la figure 1, une sélection de paires de fils libres TPL entre le central 1 et le satellite 5, et une sélection des tension Ua et intensité Ia admises dans chaque paire de fils libre TPL. A partir d'un calcul d'une puissance utile que chaque paire de fils libre TPL peut transmettre, on calcule le nombre de paires TPL nécessaires pour transmettre la puissance déterminée, en divisant celle-ci par ladite puissance utile par paire.

Ensuite, on peut effectuer un branchement, à ladite source d'énergie 3 du central 1, de chaque paire TPL nécessaire par l'intermédiaire d'au moins une sortie 11 d'un convertisseur commandé 7 qui convertit la tension nominale en tensions choisies, dont la tension admise Ua.

A l'endroit du satellite, on branche chaque paire TPL nécessaire à au moins une entrée 15 d'un convertisseur satellite 13, d'une impédance d'entrée connue et qui, recevant à l'entrée 15 la tension admise Ua, met à disposition à une sortie 17 une tension utile pour le satellite 5. On branche de plus en parallèle des sorties 17 des convertisseurs satellites 13 afin d'obtenir la puissance déterminée.

Suivant l'invention, pour que les opérations soient faites dans les meilleures conditions de sécurité, le procédé comprend, à la mise en route d'une transmission d'énergie, une commande du ou de chaque convertisseur commandé 7 pour que sa sortie 11 délivre à sa paire de fils TPL correspondante des tension Us et intensité Is continues réduites de sécurité.

La tension continue Us de quelques volts (< 10 V) appliquée par le convertisseur central peut comporter l'information du groupe de paires auquel elle est connectée au convertisseur central 7. Une réalisation pratique consiste à ajouter une composante alternative (AC) d'amplitude faible de l'ordre du volt, dont la fréquence (quelques dizaines de hertz) est une fonction du groupe (variant ici de 1 à 14 ) de paires et de l'adresse (variant ici de 1 à 20) du convertisseur central 7, ce qui permet, avec un fréquencemètre en bout de ligne, de facilement repérer les paires torsadées à connecter aux entrées d'un même convertisseur satellite 13. Tout en recevant l'information du groupe de paires, on mesure l'impédance de charge ou d'entrée Ze et tant qu'elle ne correspond pas à l'impédance d'entrée Zem d'un convertisseur satellite 13 le système reste dans cet état de démarrage.

Si l'impédance d'entrée mesurée Zem correspond chaque fois à l'impédance d'entrée connue Ze, on organise une commande du ou de chaque convertisseur commandé 7 pour que chacun délivre à sa paire de fils la tension admise Ua, avec l'intensité réduite Is de sécurité.

Après un délai de sécurité, on organise une poursuite de la mise en route par une commande du ou de chaque convertisseur commandé 7 pour que chacun délivre à sa paire de fils TPL les tension Ua et intensité la admises.

Avantageusement, pour ladite mesure de l'impédance d'entrée Ze, on règle le convertisseur commandé 7 de façon à ce que chaque paire de fils nécessaire TPL reçoive une très basse tension de sécurité Us, sans effet physiologique pour l'homme, typiquement de l'ordre de 50 volts et, de préférence, une très faible intensité de sécurité Is, sans danger pour l'homme, typiquement de l'ordre de 10 milliampères. Des valeurs inférieures peuvent être envisagées mais elles doivent être d'un niveau suffisant pour obtenir une mesure fiable de l'impédance.

Si l'impédance d'entrée mesurée Zem correspond à l'impédance d'entrée connue Ze, on peut régler alors le convertisseur commandé 7 de façon à ce que, pendant le délai de sécurité, chaque paire de fils nécessaire TPL reçoive la tension admise Ua notamment comprise entre ± 110 et ± 230 volts, et typiquement de l'ordre de 160 volts, et une intensité de sécurité Is typiquement de l'ordre de 5 milliampères.

On peut adopter de préférence une configuration selon la figure 2 suivant laquelle on relie chaque paire de fils nécessaire TPL à une sortie 11 distincte d'un convertisseur commandé 7 et à une entrée distincte 15 d'un convertisseur satellite 13 et l'on adopte alors avantageusement, pour chaque paire de fils nécessaire TPL, des valeurs d'un ordre de grandeur respectant les normes de sécurité, soit typiquement de
- 2 milliampères pour un courant de fuite à la terre,
- 25 mA maximum pour un courant de fuite en mode différentiel entre deux fils d'une paire torsadée ou d'une paire à l'autre,
- 60 milliampères pour une intensité de charge maximum en mode RTF - C,
- 20 watts de puissance maximale,
- 320 volts de tension entre les fils de la paire TPL.

On peut cependant adopter une configuration selon la figure 3 suivant laquelle on relie chaque paire de fils TPL nécessaire à plusieurs sorties 11 de convertisseur(s) commandé(s) 7 et à plusieurs entrées 15 de convertisseur(s) satellite(s) 13 et l'on peut adopter alors de préférence, pour chaque paire de fils TPL nécessaire, des valeurs d'un ordre de grandeur respectant les normes de sécurité, soit typiquement de
- 2 milliampères pour un courant de fuite à la terre,
- 25 milliampères maximum en cas de fuite différentielle entre deux fils de polarités inverses d'une même paire torsadée ou d'une paire à l'autre,
- 200 milliampères pour une intensité de charge maximum en mode RTF - V,
- 60 watts de puissance maximale,
- 320 volts de tension entre les fils de la paire TPL.

Pour vérifier qu'il n'y a pas de fuite dans une paire TPL, notamment parce qu'un individu est en contact avec un de ses fils, pour chaque paire, on peut mesurer (figure 4) dans un même fil F l'intensité Ims à la sortie 11 du convertisseur commandé 7 et l'intensité Ime à l'entrée 15 du convertisseur satellite 13 et calculer la différence entre ces intensités Ime et Ims. Si cette différence est supérieure à une valeur typiquement de l'ordre de 25 milliampères, on provoque une coupure de l'alimentation d'au moins cette paire TPL avec une réaction de coupure typiquement inférieure à 20 millisecondes.

La mesure de l'intensité Ime à l'entrée 15 devant être transmise au central 1 pour le calcul susdit, on peut avantageusement transformer (figure 5) cette mesure d'intensité Ime en une fréquence variant en fonction de la valeur mesurée, et appliquer, près de l'entrée 15 du convertisseur satellite 13 correspondant, cette fréquence à la paire de fils TPL mesurée. On peut alors prélever cette fréquence près de la sortie 11 du convertisseur commandé 7 correspondant, et utiliser cette fréquence pour calculer ladite différence d'intensités Ims et Ime.

On choisit de préférence à cet effet une bande de fréquences sinusoïdales, pour éviter des harmoniques, au-dessus de la bande audio du système de télécommunication et en dessous de la bande de transmission de données (notamment en Belgique au-dessus de 3400 Hz et en dessous de 25000Hz), par exemple de 8000 Hz à 8200Hz pour une intensité allant de 0 à 200 milliampères respectivement (soit une progression de 1 Hz pour mA).

Superposer la fréquence de la mesure Ime à la paire TPL, plutôt que de la ramener au central 1 par une autre paire de fils de surveillance, augmente le niveau de sécurité par redondance de l'information sur la même paire et diminue de manière globale le nombre de paires allouées au transport d'énergie.

Il doit être entendu que l'invention n'est nullement limitée aux formes de réalisation décrites et que bien des modifications peuvent être apportées à ces dernières sans sortir du cadre des revendications.

Notamment, le test d'impédance Zem effectué au central 1 permet de vérifier et d'assurer une connexion correcte des paires TPL à l'endroit du satellite 5.

Tout en testant l'impédance, chaque convertisseur central 7 produit un signal dont la fréquence est fonction du numéro de groupe, variant ici de 1 à 14, et de l'adresse du module (variant ici de 1 à 16) dont il fait partie. Par exemple, la fréquence 101,24 Hz signifie le groupe de paires 10 et le module central d'adresse 12; le dernier chiffre 4 n'ayant pas de signification doit être ignoré.

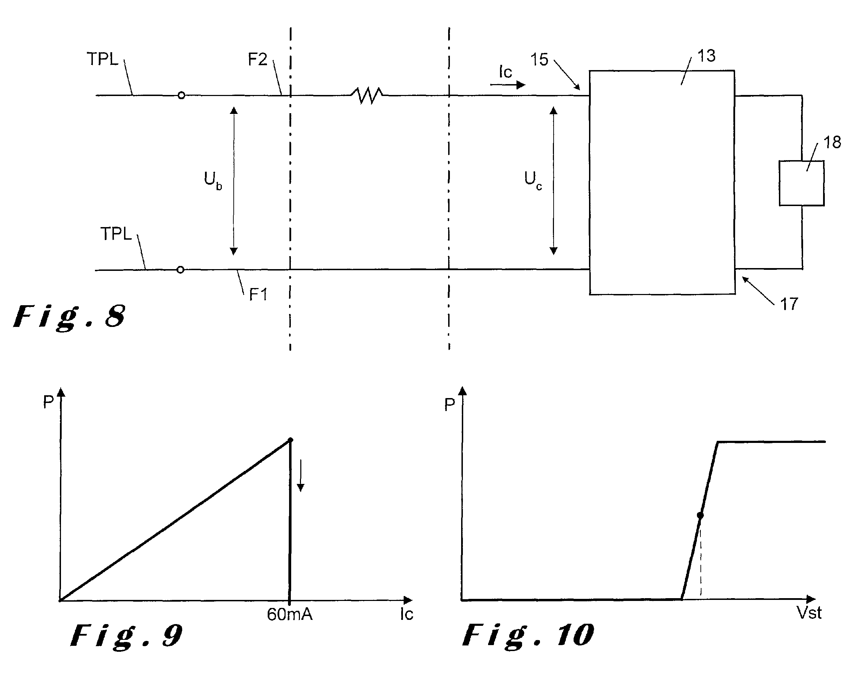

Le convertisseur satellite 13, de courant continu à courant continu, fonctionnant par découpage présente toujours une résistance d'entrée négative, donc si (figure 8) la tension d'entrée Uc décroît, l'intensité à l'entrée Ic s'accroît. La tension admise Ua appliquée à la paire TPL est limitée en intensité Ia à par exemple 60 milliampères. Si l'on considère le graphique de la figure 9 qui montre la courbe de la puissance disponible P en fonction du courant Ia dans la paire TPL, on sait que cette courbe s'arrête à un point optimum correspondant à l'intensité de 60 mA et que ce point est instable, une demande de puissance supplémentaire fortuite amène à l'effondrement de la puissance disponible. Pour éviter cela, il faut constamment maintenir le courant en dessous des 60 mA et cela n'est pas aisé dans ce contexte.

Pour pallier ce problème, il est proposé de munir le convertisseur satellite d'un calculateur "intelligent" et de programmer celui-ci pour
- calculer la résistance de ligne R1 de la paire TPL à un moment donné alors qu'il connaît les valeurs Ua, Ic et Uc définies ci-dessus, R1 = (Ua -Uc)/Ic,
- calculer une tension de stabilisation Ust = Ua - (60mA x R1).

Le graphique de la figure 10 montre la courbe, de la puissance P en fonction de la tension de stabilisation Ust, à prendre en considération dans ce cas. Il apparaît que, puisque le point de fonctionnement pour la valeur Ust est situé sur une pente à l'écart des extrémités de cette pente, une erreur sur la valeur de cette tension de stabilisation Ust n'a pas d'incidence gênante sur la puissance passée et surtout sur le fonctionnement général des appareils reliés au convertisseur satellite 13.

Pour la sécurité des opérateurs chargés du câblage du dispositif de l'invention, il y a lieu d'être assuré que les branchements à la terre sont corrects.

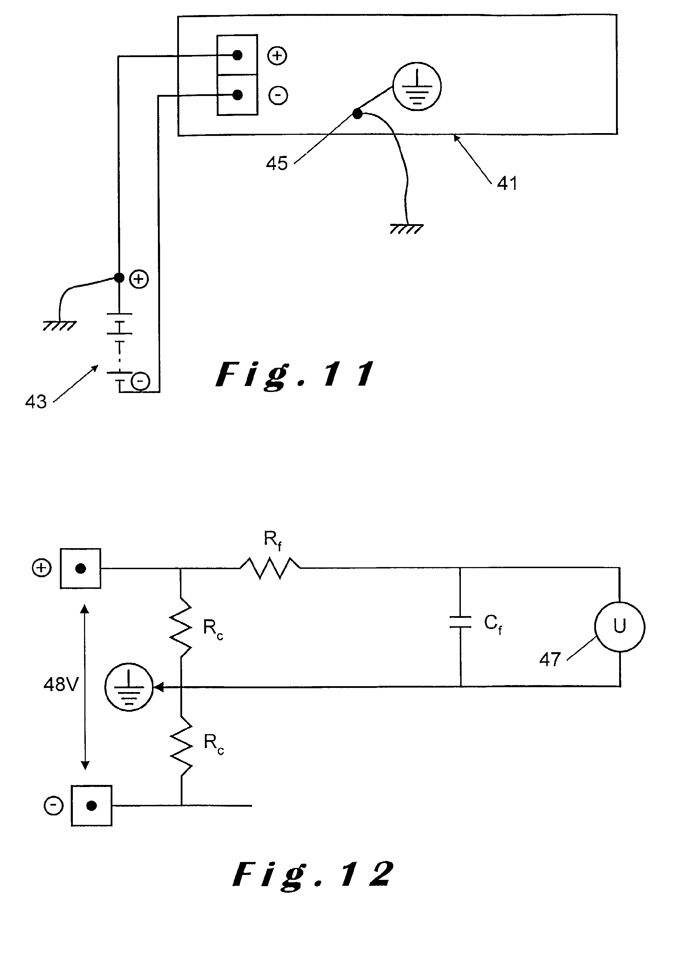

A cet effet, les figures 11 et 12 montrent un mode de branchement approprié. Des équipements 41, comme ceux de télécommunication, sont fréquemment alimentés par une batterie d'accumulateur 43 dont il est connu de raccorder le pôle positif à la terre là où se trouve cette batterie 43. De ce fait, le pôle positif de l'équipement 41 est également relié à la terre. Les pôles positif et négatif d'entrée d'alimentation de cet équipement 41 sont isolés galvaniquement de ce châssis 45. Il est alors proposé,
- d'une part, de relier le châssis métallique 45 de l'équipement 41 à la terre à l'endroit où il se trouve,
- d'autre part, de relier séparément le pôle positif et le pôle négatif de l'équipement 41 au châssis 45 de celui-ci par chaque fois une résistance de chute Rc de valeur égale, typiquement de 10 kohms.

Ce montage est complété par un moyen de mesure de tension 47 branché entre le pôle positif de l'équipement 41 et le châssis 45 de celui-ci, par l'intermédiaire d'un circuit filtrant comportant avantageusement une résistance Rf et un condensateur Cf. Une sortie de tension mesurée de ce moyen de mesure 47 est raccordée à un moyen de comparaison, connu en soi, pour comparer ladite tension mesurée à un seuil de tension de typiquement 3 volts et pour fournir un signal d'avertissement ou, de préférence, un signal exploitable pour couper immédiatement l'alimentation de l'équipement 41 en cause.

Par exemple, si la batterie 43 délivre 48 volts à l'équipement 41, et si les prises de terre sont bien raccordées de part et d'autre et efficaces, le moyen de mesure 47 ne peut pas détecter plus de 3 ou 4 volts. Des valeurs supérieures signifient une déficience de l'une ou l'autre prise de terre. Une valeur de l'ordre de 24 volts signifie une absence d'au moins une connexion à la terre. On comprend qu'en établissant une seule prise de terre pour l'équipement 41, on obtient en même temps un contrôle de la prise de terre de la batterie 43 et un contrôle de celle dudit équipement 41. Ce dispositif est également un moyen de contrôle de la chute de tension dans le câble d'alimentation et donc une vérification de l'adaptation de la section du câble par rapport à l'intensité du courant qui y circule.

Il doit être entendu que l'on ne sort pas du cadre de l'invention si l'on met en parallèle plusieurs paires TPL d'un côté sur une même sortie 11 et simultanément d'un autre côté sur une même entrée 15 ou encore par exemple si deux paires TPL ou plus partant d'une même sortie 11 sont raccordées séparément à des entrées 15 distinctes ou si deux paires TPL ou plus partant de sorties 11 séparées sont raccordées à une même entrée 15.

L'invention peut avantageusement comprendre encore des moyens d'identification des paires torsadées TP par émission d'un signal image du groupe d'origine des convertisseurs, réalisé avantageusement par une basse fréquence typiquement entre 3 et 300 Hz, bande non utilisée en télécommunication.

### Légende des figures

- Cf: condensateur de filtrage (figure 12)

- F1: un fil d'une paire TP/TPL
- F2: l'autre fil d'une paire TP/TPL
- F6: flèche du trajet du signal FM figure 6
- F7: flèche du trajet du signal FM figure 7

- Ia: intensité admise
- Ic: intensité d'entrée de 13 (figure 8)
- Ime: intensité mesurée en 15
- Ims: intensité mesurée en 11
- Is: intensité de sécurité

- Rc: résistance de chute (figure 12)
- Rf: résistance de filtrage (figure 12)
- R1: résistance de ligne (figure 8)

- TP: paire de fils
- TPL: paire de fils libre

- Ust: tension de stabilisation
- Ua: tension admise
- Ub: tension nominale
- Uc: tension d'entrée de 13 (figure 8)
- Us: tension de sécurité

- Ze: impédance d'entrée de 13
- Zem: impédance d'entrée mesurée de 13

- 1: poste de base ou central
- 3: source d'énergie ou de courant en 1
- 5: poste auxiliaire ou satellite
- 7: convertisseur commandé en 1
- 9: entrée de 7
- 11: sortie de 7
- 13: convertisseur satellite en 5
- 15: entrée de 13
- 17: sortie de 13
- 19: moyens de commande de 7
- 21: moyens de mesure d'impédance
- 23: appareil de mesure d'intensité
- 25: moyens de mesure d'intensité sur fil F1 ou F2 de 23 (notamment 25e et 25s)
- 27: moyens de calcul de différence d'intensité de 23
- 29: moyens de comparaison de 23
- 31: moyens de coupure d'alimentation
- 33: engin émetteur
- 35: engin récepteur
- 41: équipement électronique
- 43: batterie d'accumulateur
- 45: châssis métallique
- 47: moyen de mesure de tension

## Revendications

1. Procédé de transmission d'énergie électrique, d'une puissance déterminée, dans un système de télécommunications par fils qui comprend :
- un central ou poste de base (1),
- une source d'énergie électrique (3) disponible au central (1), présentant une tension nominale (Ub),
- au moins un satellite ou poste auxiliaire (5) à alimenter en énergie électrique, et
- des paires de fils (TP) de télécommunication qui relient le central (1) et le satellite (5),
le procédé comprenant :
- parmi lesdites paires (TP), une sélection de paires (TPL) de fils libres entre le central (1) et le satellite (5),
- une sélection des tension (Ua) et intensité (Ia) admises dans chaque paire de fils libre (TPL),
- un calcul d'une puissance utile que chaque paire de fils libre (TPL) peut transmettre,
- un calcul du nombre de paires (TPL) nécessaires pour transmettre la puissance déterminée, en divisant celle-ci par ladite puissance utile par paire (TPL),
- un branchement, à ladite source d'énergie (3) du central (1), de chaque paire (TPL) nécessaire par l'intermédiaire d'au moins une sortie (11) d'un convertisseur commandé (7) qui convertit la tension nominale (Ub) en tensions choisies, dont la tension admise (Ua),
- à l'endroit du satellite (5), un branchement de chaque paire nécessaire à au moins une entrée (15) d'un convertisseur satellite (13), d'une impédance d'entrée (Ze) connue et qui, recevant à l'entrée (15) la tension admise (Ua), met à disposition à une sortie (17) une tension utile pour le satellite (5), et un branchement en parallèle des sorties (17) des convertisseurs satellites (13) afin d'obtenir la puissance déterminée,
le procédé étant ***caractérisé en ce qu'***il comprend :
- à la mise en route d'une transmission d'énergie, une commande du ou de chaque convertisseur commandé (7) pour que sa sortie (11) délivre à sa paire de fils (TPL) correspondante des tension (Us) et intensité (Is) réduites de sécurité, et ensuite
- une mesure de l'impédance d'entrée (Zem) de chaque convertisseur satellite (13),
- si cette impédance d'entrée mesurée (Zem) ne correspond pas chaque fois à l'impédance d'entrée (Ze) connue, une coupure de l'alimentation d'au moins la ou les paires (TPL) concernées par une non correspondance, et une suspension de la mise en route,
- si cette impédance d'entrée mesurée (Zem) correspond chaque fois à l'impédance d'entrée (Ze) connue, une commande du ou de chaque convertisseur commandé (7) pour que chacun délivre à sa paire de fils (TPL) la tension admise (Ua), avec l'intensité réduite de sécurité (Is), et
- après un délai de sécurité, une poursuite de la mise en route par une commande du ou de chaque convertisseur commandé (7) pour que chacun délivre à sa paire de fils (TPL) les tension (Ua) et intensité (Ia) admises.

2. Procédé suivant la revendication 1, **caractérisé en ce que** pour ladite mesure de l'impédance d'entrée (Zem), on règle le convertisseur commandé (7) de façon à ce que chaque paire de fils (TPL) nécessaire reçoive
- une très basse tension de sécurité (Us), sans effet physiologique pour l'homme, typiquement de l'ordre de 50 volts, et
- de préférence une très faible intensité de sécurité (Is), sans danger pour l'homme, typiquement de l'ordre de 5 milliampères.

3. Procédé suivant l'une ou l'autre des revendications 1 et 2, **caractérisé en ce que**, si l'impédance d'entrée mesurée (Zem) correspond à l'impédance d'entrée (Ze) connue, on règle le convertisseur commandé (7) de façon à ce que, pendant le délai de sécurité, chaque paire de fils (TPL) nécessaire reçoive
- la tension admise (Ua), comprise entre 110 et 230 volts, typiquement de l'ordre de ± 160 volts, et
- une intensité de sécurité (Is), typiquement de l'ordre de 5 milliampères.

4. Procédé suivant l'une quelconque des revendications 1 à 3, **caractérisé en ce que** l'on relie chaque paire de fils (TPL) nécessaire à une sortie (11) distincte d'un convertisseur commandé (7) et à une entrée distincte (15) d'un convertisseur satellite (13) et **en ce que** l'on adopte de préférence, dans cette configuration et pour chaque paire de fils (TPL) nécessaire, des valeurs d'un ordre de grandeur respectant les normes de sécurité, soit typiquement de
- 2 milliampères pour un courant de fuite,
- 25 milliampères pour un courant de fuite différentielle entre deux fils d'une paire torsadée ou d'une paire à l'autre,
- 60 milliampères pour une intensité de charge maximum,
- 20 watts de puissance maximale,
- 320 volts de tension entre les fils de la paire.

5. Procédé suivant l'une quelconque des revendications 1 à 3, **caractérisé en ce que** l'on relie chaque paire de fils (TPL) nécessaire à plusieurs sorties (11) de convertisseur(s) commandé(s) (7) et à plusieurs entrées (15) de convertisseur(s) satellite(s) (13) et **en ce que** l'on adopte de préférence, dans cette configuration et pour chaque paire de fils (TPL) nécessaire, des valeurs d'un ordre de grandeur respectant les normes de sécurité, soit typiquement de
- 2 milliampères pour un courant de fuite à la terre,
- 25 milliampères maximum en cas de fuite différentielle entre deux fils de polarités inverses d'une même paire torsadée ou d'une paire à l'autre,
- 200 milliampères pour une intensité de charge maximum,
- 60 watts de puissance maximale,
- 320 volts de tension entre les fils de la paire.

6. Procédé suivant l'une quelconque des revendications 1 à 5, **caractérisé en ce que**, pour chaque paire (TPL),
- on mesure dans un même fil (F1, F2) l'intensité (Ims) à la sortie (11) du convertisseur commandé (7) et l'intensité (Ime) à l'entrée (15) du convertisseur satellite (13),
- on calcule la différence entre l'intensité à la sortie (Ims) et l'intensité à l'entrée (Ime), et
- si cette différence est supérieure à une valeur typiquement de l'ordre de 25 milliampères, on coupe l'alimentation d'au moins cette paire (TPL) avec une réaction de coupure typiquement inférieure à 20 millisecondes.

7. Procédé suivant la revendication 6, **caractérisé en ce que**
- on transforme la mesure d'intensité (Ime) réalisée à l'entrée (15) du convertisseur satellite (13) en une fréquence variant en fonction de la valeur mesurée,
- on applique, près de l'entrée (15) du convertisseur satellite (13) correspondant, cette fréquence à la paire de fils (TPL) mesurée,
- on prélève cette fréquence près de la sortie du convertisseur commandé correspondant, et
- on utilise cette fréquence pour la comparer à la mesure locale du convertisseur satellite (13).

8. Procédé suivant la revendication 7, **caractérisé en ce que** l'on choisit à cet effet une bande de fréquences sinusoïdales au-dessus de la bande audio du système de télécommunication et en dessous de la bande de transmission de données.

9. Dispositif de transmission d'énergie électrique d'une puissance déterminée, dans un système de télécommunications par fils, pour la mise en oeuvre du procédé suivant l'une quelconque des revendications 1 à 8, le système comprenant :
- un central (1) ou poste de base,
- une source d'énergie électrique disponible au central (1), présentant une tension nominale (Ub),
- au moins un satellite (5) ou poste auxiliaire à alimenter en énergie électrique, et
- des paires de fils (TP) de télécommunication qui relient le central (1) et le satellite (5),
***le dispositif étant caractérisé en ce qu'***il comprend, pour chaque paire de fils nécessaire et libre (TPL) pour être utilisée pour la transmission d'énergie électrique :
- au central (1), un convertisseur commandé (7) agencé pour recevoir à une entrée (9) branchée à la source d'énergie (3) du central (1) la tension nominale (Ub) et transformer celle-ci en tensions choisies, dont ladite tension admise (Va), disponibles à au moins une sortie (11) branchée à ladite paire libre (TPL) nécessaire,
- à l'endroit du satellite (5), un convertisseur satellite (13) comportant une entrée (15), d'une impédance d'entrée (Ze) connue, branchée à la paire de fils (TPL) nécessaire et une sortie (17) branchée en parallèle avec la ou les sorties (17) d'autres convertisseurs satellites (13) pour obtenir la puissance déterminée,
- des moyens de commande (19) raccordés fonctionnellement à chaque convertisseur commandé (7), agencés pour commander celui-ci de façon à ce que sa sortie (11) susdite délivre à la paire de fils (TPL) nécessaire correspondante, au moment d'une mise en route, des tension (Us) et intensité (Is) réduites de sécurité,
- raccordés fonctionnellement aux moyens de commande (19), des moyens (21) de mesure de l'impédance d'entrée (Zem) de chaque convertisseur satellite (13), ces moyens de commande (19) étant agencés de façon à ce que,
- si cette impédance d'entrée mesurée (Zem) ne correspond pas chaque fois à l'impédance d'entrée (Ze) connue du convertisseur satellite (13), ils provoquent une coupure de l'alimentation d'au moins la ou les paires (TPL) concernées par une non correspondance, et une suspension de la mise en route,
- si cette impédance d'entrée mesurée (Zem) correspond chaque fois à l'impédance d'entrée (Ze) connue, ils provoquent une commande du ou de chaque convertisseur commandé (7) pour que la sortie (11) de celui-ci délivre à sa paire de fils (TPL) correspondante la tension admise (Ua), avec l'intensité réduite de sécurité (Is) et, après un délai de sécurité, avec l'intensité admise (Ia).

10. Dispositif suivant la revendication 9, **caractérisé en ce que** chaque paire de fils (TPL) nécessaire est reliée à une sortie (11) distincte d'un convertisseur commandé (7) et à entrée (15) distincte d'un convertisseur satellite (13) et **en ce que**, de préférence, chaque sortie (11) de convertisseur commandé (7) est agencée pour donner des valeurs d'un ordre de grandeur respectant les normes de sécurité, soit typiquement de
- 2 milliampères pour un courant de fuite à la terre,
- 25 milliampères maximum en cas de fuite différentielle entre deux fils de polarités inverses d'une même paire torsadée ou d'une paire à l'autre,
- 60 milliampères pour une intensité de charge maximum,
- 20 watts de puissance maximale,
- 320 volts de tension entre les fils de la paire.

11. Dispositif suivant la revendication 9, **caractérisé en ce que** chaque paire de fils (TPL) nécessaire est reliée à trois sorties (11) de convertisseur(s) commandé(s) (7) et à trois entrées (15) de convertisseur(s) satellite(s) (13) et **en ce que**, de préférence, pour chaque paire de fils (TPL) nécessaire chacune desdites sorties (11) est agencée pour donner des valeurs d'un ordre de grandeur respectant les normes de sécurité, soit typiquement de
- 2 milliampères pour un courant de fuite,
- 200 milliampères pour une intensité de charge maximum,
- 60 watts de puissance maximale,
- 25 milliampères en cas de défaut entre fils de polarités inverses sur une même paire,
- 320 volts de tension entre les fils de la paire.

12. Dispositif suivant l'une quelconque des revendications 9 à 11, **caractérisé par** un appareil de mesure (23) comportant, raccordés fonctionnellement entre eux
- des moyens (25e, 25s) pour mesurer, pour chaque paire libre (TPL) nécessaire, dans un même fil (F1, F2) l'intensité à la sortie (11) du convertisseur commandé (7) et l'intensité (Ime) à l'entrée (15) du convertisseur satellite (13),
- des moyens pour calculer la différence entre l'intensité (Ims) à la sortie (11) du convertisseur commandé (7) et l'intensité (Ime) à l'entrée (15) du convertisseur satellite (13) pour ce même fil (F1, F2),
- des moyens (29) de comparaison pour vérifier si cette différence est inférieure ou supérieure à une valeur typiquement de l'ordre de 25 milliampères, et
- des moyens (31) pour couper l'alimentation d'au moins cette paire (TPL), si ladite différence est supérieure, avec une réaction de coupure typiquement inférieure à 20 millisecondes.

13. Dispositif suivant la revendication 12, **caractérisé en ce qu'**il comporte, associé audit appareil de mesure (23),
- à l'endroit du satellite (5), un engin émetteur (33) agencé
- pour transformer la mesure d'intensité (Ime) réalisée à l'entrée (15) du convertisseur satellite (13) en une fréquence variant en fonction de la valeur mesurée, et
- pour appliquer cette fréquence à la paire de fils (TPL) mesurée, et
- à l'endroit du convertisseur commandé (7), un engin récepteur (35) agencé pour capter ladite fréquence sur la même paire de fils (TPL), pour la transformer à l'inverse en la valeur d'intensité mesurée (Ime) et pour transmettre cette valeur aux moyens prévus pour calculer ladite différence.

14. Dispositif suivant l'une quelconque des revendications 9 à 13, **caractérisé en ce qu'**au moins un convertisseur satellite (13) est équipé d'un calculateur programmable agencé
- pour déduire une tension de stabilisation (Ust) à partir de la tension admise (Ua), des tension (Uc) et intensité (Ic) à ses bornes d'entrée (15) et de l'intensité de sécurité (Is), et
- pour régler une puissance (P) de fonctionnement par cette tension de stabilisation (Ust).

15. Dispositif suivant l'une quelconque des revendications 9 à 13, **caractérisé en ce qu'**il comporte :
- une liaison d'un pôle positif de la source d'énergie (3), notamment de sa batterie d'accumulateur (43), à une prise de terre,
- une liaison de la masse du châssis métallique (45) d'un équipement électronique (41), en particulier du convertisseur commandé (7), à une autre prise de terre différente de celle précitée, la masse du châssis métallique (45) étant isolée galvaniquement des pôles de la source d'énergie (3, 43) courant,
- une liaison du pôle positif, d'une part, et du pôle négatif, d'autre part, audit châssis métallique (45) par chaque fois une résistance de chute (Rc),
- une liaison d'un moyen de mesure de tension (47) au pôle positif de l'équipement (41), avantageusement par l'intermédiaire d'une résistance de filtrage (Rf), et audit châssis métallique (45), un condensateur de filtrage (Cf) pouvant être branché en parallèle au moyen de mesure de tension (47), et
- une liaison de sortie de tension mesurée du moyen de mesure de tension (47) à un moyen de comparaison entre la tension mesurée de cette sortie et un seuil de tension de typiquement 3 volts.

16. Dispositif suivant l'une quelconque des revendications 9 à 15, **caractérisé en ce qu'**il comporte des moyens d'identification des paires torsadées (TP) par émission d'un signal image du groupe d'origine des convertisseurs, réalisé avantageusement par une basse fréquence typiquement entre 3 et 300 Hz, bande non utilisée en télécommunication.
